# EUROPEAN PATENT SPECIFICATION

(11) **EP 4 119 215 B1**
(45) Date of publication and mention of the grant of the patent: **10.04.2024**
(21) Application number: 22182986.4
(22) Date of filing: 05.07.2022
(51) Int. Cl.: B01D 53/30, B01D 53/34, B01D 53/64

(54) **FUME TREATMENT PLANT EQUIPPED WITH A MERCURY EMISSIONS ABATING SYSTEM WITH A FIXED BED OF CHEMI-ADSORBENTS AND A METHOD FOR ABATING MERCURY EMISSIONS IN A FUME TREATMENT PLANT**
RAUCHGASBEHANDLUNGSANLAGE MIT CHEMISCH-ADSORPTIVER QUECKSILBERABSCHEIDUNG UND VERFAHREN ZUR QUECKSILBERABSCHEIDUNG IN EINER RAUCHGASBEHANDLUNGSANLAGE
INSTALLATION DE TRAITEMENT DE FUMÉE AVEC RÉDUCTION DE MERCURE PAR CHIMI-ADSOPRTION ET PROCÉDÉ DE REDUCTION DE MERCURE DANS UNE INSTALLATION DE TRAITEMENT DE FUMÉE

(30) Priority: 12.07.2021 IT 202100018299
(43) Date of publication of application: 18.01.2023
(73) Proprietor: Area Impianti S.p.A., 35020 Albignasego (PD) (IT)
(72) Inventor: ZATTI, Francesco, I-35020 Albignasego, PADOVA (IT); MARCOLIN, Angelo, I-35020 Albignasego, PADOVA (IT); CARDIN, Ivana, I-35020 Albignasego, PADOVA (IT)
(74) Representative: Zanettin, Gianluigi

(56) References cited:
- JP-B2- 6 805 788
- PL-B1- 234 647
- US-B2- 9 051 215

## Description

### Field of application

The subject of the present invention is a fume treatment plant equipped with a system for abating mercury emissions with a fixed bed of chemi-adsorbents and a method for abating mercury emissions in a fume treatment plant.

### Prior art

The control of mercury emissions has been a highly topical issue since medium/large industrial plants (e.g., cement plants, waste-to-energy plants, etc.) have recently been (or soon will be) required to equip themselves with continuous monitoring systems for mercury (Hg) emissions.

For all of the aforementioned plants, and in particular for municipal waste-to-energy and incineration plants, the resulting Hg emission trends show discontinuous behavior, characterized by alternating periods of low emissions and periods with peak emissions that exceed (even by several orders of magnitude) the limits imposed by law (see for example, ADEME Agence de la transition ecologique, 2021)).

Compliance with these limits (e.g., 5 to 20 ug/Nm3, according to current regulations for waste incineration (BAT, 2019; taken from COMMISSION EXECUTION DECISION (EU) 2019/2010 of November 12, 2019 establishing conclusions on Best Available Techniques (BAT) under Directive 2010/75/EU of the European Parliament and of the Council for the Incineration of Waste) requires plant operators to install appropriate abatement systems to abate mercury from fumes before they are emitted into the atmosphere.

Applicable systems for the purpose of abating mercury in fumes are separated into:
- wet systems (involving scrubbing the fumes with a solution of water and reagents); and
- dry systems.

Wet systems (scrubbers) are quite complex, expensive, and are generally used to abate also other types of pollutants (e.g., halogenated acids, SO2, etc.) as well as mercury.

Conversely, in light of greater simplicity, dry systems have lower costs for both investment and operation, better lending themselves to be implemented on existing fume treatment plants (typically equipped with bag filters). Dry plants typically use adsorbents (activated carbon or lignite cokes, impregnated, if necessary, with sulfides, bromides, iodides) in powder or pellet form.

Powdered carbons are usually injected directly into the fume ducts. In the path between the injection point and the inlet to the filter (typically a bag filter or ESP electrostatic filter), they are mixed homogeneously with the gases and then allowed to settle on the reagent layer (cake) on the filtering bags or the catchment plates of the ESPs; the powdered carbons are later extracted from the filter as spent/rejected reagent. In a different way, adsorbent pellets are arranged inside a fixed bed that is penetrated by the fumes, thus achieving purification of said fumes.

The technical literature points to fixed bed systems as the best solution for containing mercury emissions (Soelberg, N., & Enneking, N. (2010). Carbon Bed Mercury Emissions Control for Mixed Waste Treatment; Journal of the Air & Waste Management Association). Moreover, fixed bed systems with impregnated activated carbon have proven effective in removing mercury in both elemental form (Hg0) and in mercury chloride (HgCl2) (Del Debbio, Watson, & Heintzelman. (2003), Long-term performance of sulfur impregnated granular activated carbon (GAC) for mercury removal from NWCF off-gas).

Typically, a fixed bed Hg abatement system comprises a fixed bed reactor with impregnated activated carbon adsorbent. The abatement mechanism is briefly described below: as the fumes pass through the bed, the pollutant is removed by means of a combined process of physical adsorption and chemical reaction, called chemi-adsorption. The physical adsorption phenomenon and the chemical abatement phenomenon have opposing requirements: physical adsorption improves (increases) as temperature decreases, as opposed to chemical reactions that are favored by high temperatures. According to recent experimental data (Min, H.-K., & et al. (2015), Mercury Adsorption Characteristics of Sulphur-Impregnated Activated, Journ. Adsorption Science & Technology) the system is effective in the range of 90°C to 180°C, with an optimal operating range for temperatures around 120-140°C that provide higher chemi-adsorption efficiencies. It should be noted that these temperature values lend themselves well to fumes from industrial plants that are close to being emitted into the atmosphere, as they avoid the formation of acidic condensates (which may cause corrosion of ducts and in stacks), as well as phenomena of excessive visibility of the stack emission plume (typically unwelcome by the public).

The fixed bed reactor solution represents an already established industry standard for the removal of various pollutants and has been used for the removal of mercury from fumes in special cases, such as the treatment of radioactive waste for civilian and military applications (Soelberg & Enneking, 2010). However, there is limited data available in the literature, given the confidentiality associated with certain applications. At the same time, systems applied to the municipal waste incineration sector are currently in the experimental and/or pilot plant stage.

Fixed bed reactors for mercury are normally used continuously; said operation is adequate for applications involving a constant presence of Hg in the fumes (coal-fired thermo-electric power plants, special waste incinerators, etc.), but appears inherently inefficient in light of the discontinuous emissions exhibited by municipal incinerators. There are at least three reasons for this inefficiency:
- 1) the presence of an additional reactor employed continuously causes an increase in pressure losses along the fume line (which must be compensated for by an increase in fan power), even when mercury concentrations in the fumes are already autonomously below the imposed limits;
- 2) the presence of other adsorbable pollutants (e.g., COT, PCDD/F) in the fumes (albeit below the mandated limits) results in undesired adsorption of these substances in the reactor, to the detriment of the need to preserve the fixed bed for mercury alone, thus reducing its operating life;
- 3) the inevitable accumulation on the fixed bed of fine dust present in the fumes downstream of a treatment line (typically ~1 mg/Nm3) results in a fouling of activated carbon with: a) consequent loss of efficiency; b) potential increased risk of self-ignition phenomena (bed fires).

The installation of HEPA filters upstream of the fixed bed reactor would be required to avoid fine dust accumulation in the fixed bed reactor, further increasing pressure losses and the complexity of the system (higher fixed, operational, and maintenance costs).

In fact, for the proper and safe use of a fixed bed reactor with activated carbon, the fundamental risk to be avoided is bed fires (also called hot spots), i.e., fires that are generated in the activated carbon bed. The main causes of these bed fires include:
a) obstructions in the bed caused by dust accumulation;
b) a low flow rate of the fumes, which is not sufficient to obtain homogeneous thermo-regulation of the fixed bed;
c) leakage of (oxygen-rich) air through the walls of ducts or casing containing fixed beds;
d) sudden and abrupt changes in the oxygen content of the fumes, which are particularly dangerous if accompanied by increases in the temperature of said fumes;
e) high NOx concentrations in the fumes passing through the fixed bed.

In particular, in these fixed bed systems, bed fires statistically occur mainly in transitions, upon activation or reactivation of the fixed bed reactor. Therefore, variable conditions typical of conventional on-demand systems (i.e., which operate only on demand) are generally discouraged, unless control and shutdown systems with nitrogen injections are provided in order to refill the reactor (eliminating oxygen) each time the system is shut down. Although in principle possible, this solution involves considerable costs related to the storage, control, and consumption of nitrogen.

In the immediate future, various industrial plants (municipal waste incinerators first and foremost) will be equipped with mercury emissions abatement systems. Measurements made of Hg emissions show discontinuous trends that could be efficiently managed by reactors that may be activated on demand. This would make it possible to lengthen the operating life of the fixed bed (avoiding the adsorption of substances other than mercury) and to avoid the continuous increase in pressure losses of the fume treatment system, as well as the excessive fouling of the fixed beds caused by the accumulation of fine dust inevitably present in the treated fumes. However, with the currently known plant solutions, on-demand operation results in increased fire risks due to the sensitivity of activated carbon beds to changes in operating conditions, particularly in the presence of dust. A concept for removing mercury from flue gases emitted by clinker burning furnaces is described in PL 420009 A1.

There is therefore a great need for fume treatment plants equipped with a mercury emissions abatement system that may be activated on demand (i.e., it may operate discontinuously) and at the same time may be operated efficiently and safely. In particular, a safe management of the mercury emissions abatement system correlates with a significant reduction in the risk of bed fires. To date, however, this need is still unmet, unless the nitrogen injection systems described above are used at every system shutdown.

### Disclosure of the invention

Therefore, the main object of the present invention is to eliminate all or part of the drawbacks of the aforementioned prior art by providing a fume treatment plant equipped with a mercury emissions abatement system with a fixed bed of chemi-adsorbents, which may be operated on demand and at the same time may be operated efficiently and safely, especially reducing the risk of bed fires.

A further object of the present invention is to make available a fume treatment plant equipped with a mercury emissions abatement system with a fixed bed of chemi-adsorbents that may be made to operate on demand and is both operationally reliable and simple to operate.

A further object of the present invention is to make available a fume treatment plant equipped with a mercury emissions abatement system with a fixed bed of chemi-adsorbents that may be made to operate on demand and at the same time does not result in a significant increase in plant and operating costs.

A further object of the present invention is to provide a mercury emissions abatement method in a fume treatment plant which uses a system with a fixed bed of chemi-adsorbents and allows on-demand management of mercury emission peaks in an efficient yet safe manner, particularly reducing the risk of bed fires.

### Brief description of the drawings

The technical features of the invention, according to the aforesaid aims, may clearly be seen in the content of the claims below, and its advantages will become more readily apparent in the detailed description that follows, made with reference to the attached drawings, which show one or more purely illustrative and non-limiting embodiments thereof, wherein:

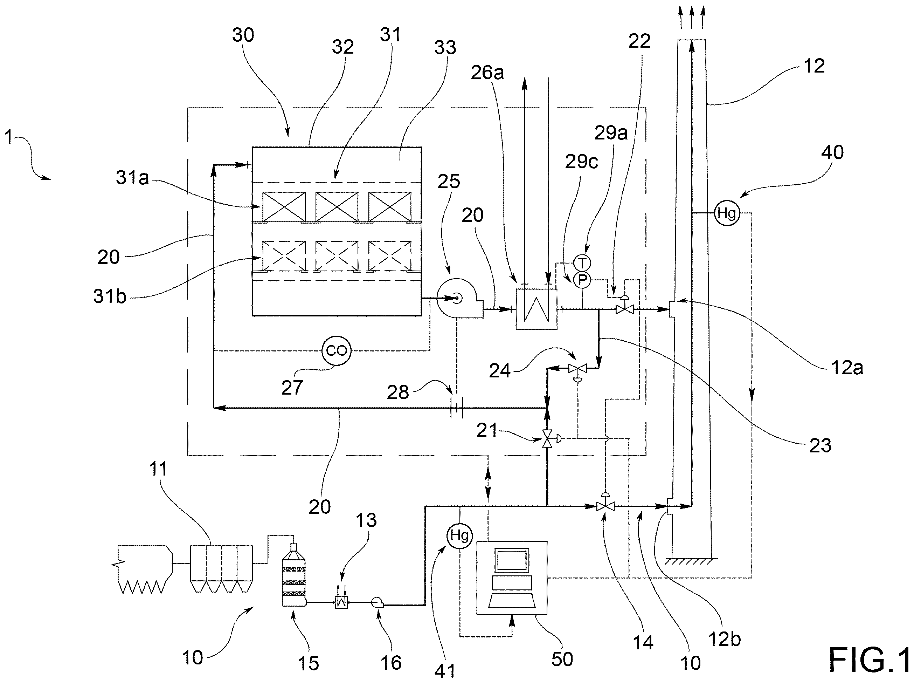

- Fig. 1 is a simplified schematic of a fume treatment plant equipped with a mercury emissions abatement system with a fixed bed of chemi-adsorbents according to a preferred first embodiment of the invention, shown in an operating condition wherein the mercury emissions abatement system is in a stand-by operating condition;

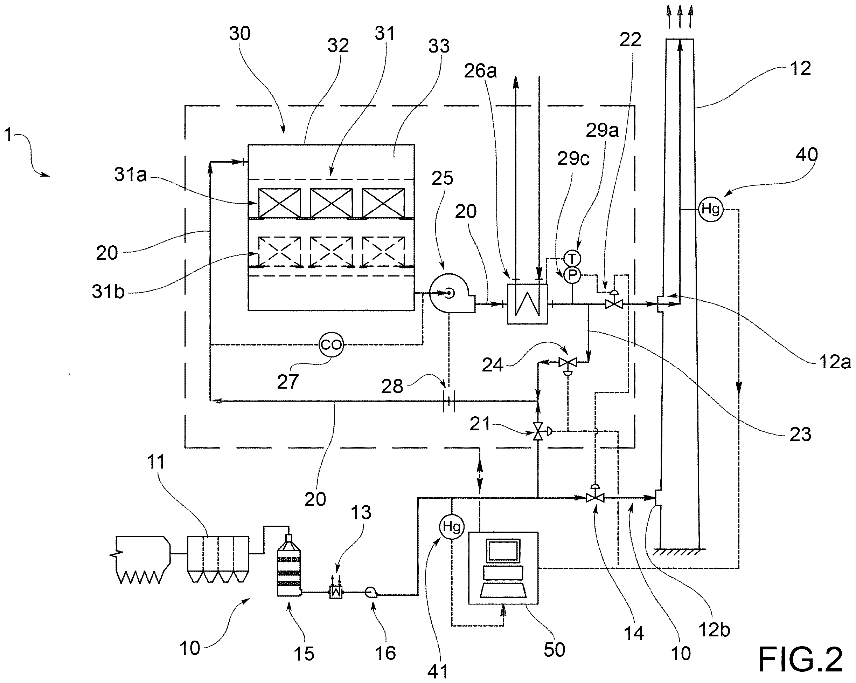

- Fig. 2 is a simplified schematic of the plant in Fig. 1, shown in an operating condition wherein the mercury emissions abatement system is in an active operating condition; and

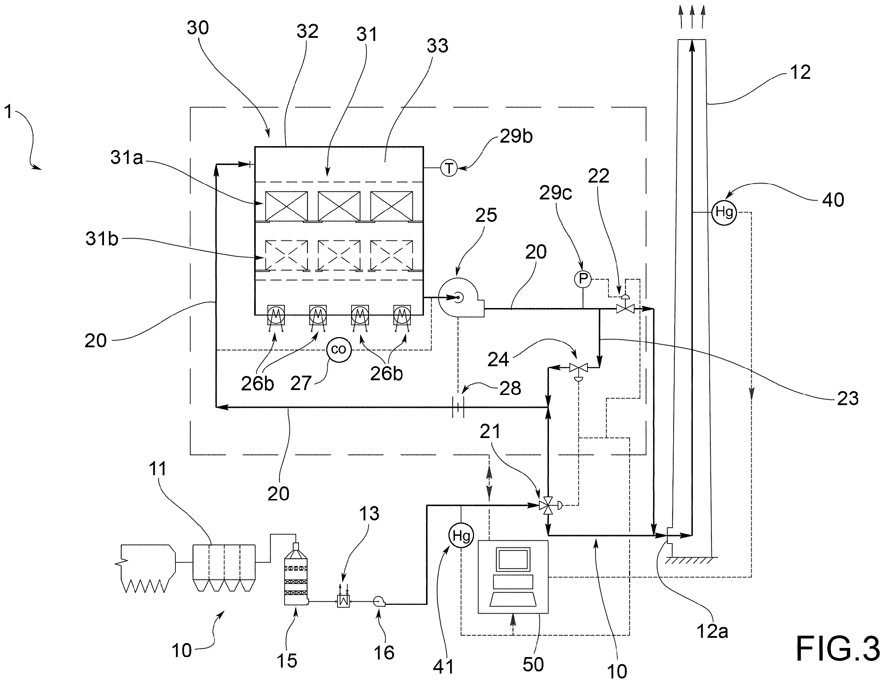

- Fig. 3 is a simplified schematic of a fume treatment plant equipped with a mercury emissions abatement system with a fixed bed of chemi-adsorbents according to a second embodiment of the invention, shown in an operating condition wherein the mercury emissions abatement system may be in stand-by or active operating condition depending on the positioning of the three-way valve.

### Detailed description

The fume treatment plant equipped with a mercury emissions abatement system with a fixed bed of chemi-adsorbents according to the invention has been denoted as a whole as 1 in the attached figures.

The fume treatment plant 1 according to the invention is destined to treat gaseous emissions that exhibit mercury (Hg) emission trends having discontinuous behavior, characterized by alternating periods of low emissions and periods of peak emissions.

In the present description and the attached claims, the term "mercury emissions" is to be understood in a general sense and comprises any gaseous emissions containing mercury either in elemental form or in combined form, i.e., bound in organic or inorganic compounds, such as mercury chloride (HgCl2).

In particular, the fume treatment plant 1 according to the invention is destined to treat emissions from medium/large industrial plants, such as, for example, cement plants or waste-to-energy plants. The fume treatment plant 1 is particularly suitable for treating gaseous emissions generated by municipal waste-to-energy and incineration plants.

According to a general embodiment of the invention, the fume treatment plant 1 comprises a main fume treatment line 10 that is equipped with at least one filtering device 11 and a stack 12 for discharging the treated fumes into the environment.

The aforesaid at least one filtering device 11 may be of any type suitable for the purpose; in particular, it may be a bag or ceramic candle filter.

Advantageously, as shown in the attached figures, the main fume treatment line 10 may comprise one or more pollutant abatement devices. For example, the line 10 may include a NOx abatement and control system, particularly of the Selective Catalytic Reduction (SCR) type, denoted as 15 in the figures.

Preferably, the main fume treatment line 10 comprises ventilation means, denoted as 16 in the figures.

Advantageously, the main fume treatment line 10 may be equipped with at least one recuperative heat exchanger 13 that is suitable for recovering heat from the fumes before they enter the stack 12. Preferably, said recuperative heat exchanger 13 is arranged downstream of the NOx abatement and control system 15 to cool the fumes leaving said NOx abatement and control system at a temperature between 120°C and 130°C.

The fume treatment plant 1 comprises a by-pass branch 20 of the main fume treatment line 10 that is arranged downstream of the aforementioned at least one filtering device 11 and is fluidically connectable to the main fume treatment line 10 via an inlet by-pass valve 21 and an outlet by-pass valve 22.

Preferably, as illustrated in the attached figures, in the event that the main fume treatment line 10 comprises a NOx abatement and control system 15, and/or ventilation means 16 and/or a recuperative heat exchanger 13, the aforesaid by-pass branch 20 is arranged downstream of all such devices 13, 15 and 16.

According to the embodiment shown in Fig. 1 and 2, the inlet by-pass valve 21 consists of a single shut-off valve. In said case, the main fume treatment line 10 is equipped with a shut-off valve 14 inserted between the inlet by-pass valve 21 and the stack 12. Operationally, to divert fumes through the by-pass branch 20, it is necessary to open the two by-pass valves 21 and 22 and close the shut-off valve 14.

According to the alternative embodiment shown in Fig. 3, the inlet by-pass valve 21 may consist of a three-way valve. In said case, the operation of the three-way valve to divert the fumes from the by-pass branch 20 automatically results in the blockage of the flow of fumes to the stack via the main line 10. Therefore, it is not necessary for the main fume treatment line 10 to have a dedicated shut-off valve inserted between the inlet by-pass valve 21 and the stack 12.

As shown in Fig. 1 and 2, downstream of the outlet by-pass valve 22, the by-pass branch 20 may flow directly to the stack 12 via a dedicated stack inlet 12a different from the dedicated stack inlet 12b to the main fume treatment line 10. Alternatively, as shown in Fig. 3, downstream of the outlet by-pass valve 22, the by-pass branch may flow into the main line 10 upstream of the stack 12 and take advantage of the same stack inlet 12b as the main line.

The fume treatment plant 1 further comprises a mercury emissions abatement system 30. Said mercury emissions abatement system 30 comprises a fixed bed of chemi-adsorbents 31 and is fluidically inserted into the aforesaid by-pass branch 20.

Due to the fact that the by-pass branch 20 is connected to the main fume treatment line 10 downstream of the aforesaid filtering device 11, and preferably downstream of the NOx abatement and control system 15 when provided, the fumes that are routed through the by-pass branch 20 and then through the mercury emissions abatement system 30 have a reduced dust and NOx load since they have already been filtered. This reduces the risk of clogging the mercury emissions abatement system 30 with dust contained in the fumes. Moreover, if the fumes are treated beforehand with the NOx abatement and control system 15, high NOx concentrations that could favor hot spots in the fixed bed are avoided.

Preferably, the chemi-adsorbents of the fixed bed in the mercury emissions abatement system consist of activated carbon and/or lignite coke impregnated with substances suitable to react with mercury in order to chemically trap it in the substrate defined by activated carbon or lignite coke. In particular, activated carbons and/or lignite coke are impregnated with sulfides, bromides, and/or iodides. Preferably, the chemi-adsorbents of the fixed bed are in the form of pellets.

Preferably, the aforesaid chemi-adsorbents are suitable to perform chemi-adsorption of mercury in the temperature range of 90°C to 180°C, and even more preferably between 120°C and 130°C.

Mercury abatement deriving from the aforesaid chemi-adsorbents is based on a combined mechanism of physical adsorption and chemical reaction, called chemi-adsorption. The physical adsorption phenomenon and the chemical abatement phenomenon have opposing requirements: physical adsorption improves (increases) as temperature decreases, as opposed to chemical reactions that are favored by high temperatures. Preferably, the chemi-adsorption abatement process is effective in the range of 90°C to 180°C, with an optimal operating range for temperatures around 120-140°C that provide higher chemi-adsorption efficiencies.

Preferably, as shown in the attached figures, the aforesaid mercury abatement system 30 comprises a containment structure (casing) 32 defining an inner chamber 33 that is fluidically connected to the by-pass branch and in which the fixed bed of chemi-adsorbents 31 is placed.

Advantageously, as shown in the attached figures the fixed bed of chemi-adsorbents 31 may be structured on one or more stages of chemi-adsorbents, denoted in the figures as 31a and 31b. The number of stages of chemi-adsorbents is determined according to the abatement/management requirements of the fume treatment plant 1. Specifically, being the concentration of mercury in the fumes equal, the installation of an additional stage of chemi-adsorbents will result in either higher abatement (i.e., lower concentration of Hg in the fumes at the outlet) or less frequent replacement of spent (saturated) chemi-adsorbents in the stages being the amount of time of use equal. Advantageously, the containment structure 32 may be prepared for the installation of the additional stages in such a way that the operator of the plant 1 may independently assess whether and when to install them (e.g., as regulatory emission limits change).

The fume treatment plant 1 further comprises at least one mercury concentration analyzer 40, 41, which in use is suitable for detecting the concentration of mercury in the fumes flowing into the main fume treatment line 10.

Preferably, the aforesaid at least one mercury concentration analyzer 40 is installed in the stack 12.

Advantageously, as shown in the attached figures, the plant 1 comprises two mercury concentration analyzers 40 and 41. A first mercury concentration analyzer 40 is installed in the stack 12, and a second mercury concentration analyzer 41 (also called a process analyzer) is installed in the main fume treatment line 10 upstream of the by-pass branch 20.

According to alternative embodiments of the invention, the plant 1 may be equipped with a single mercury analyzer 41 installed in the main fume treatment line upstream of the by-pass branch 20.

As shown schematically in the attached figures, the fume treatment plant 1 comprises a control system 50.

Said control system 50 is connected to said at least one mercury concentration analyzer 40, 41 and to said inlet 21 and outlet 22 by-pass valves. In the event that two analyzers 40 and 41 are provided, the control system 50 is connected to both analyzers.

The control system 50 is programmed to:
- open the by-pass valves 21, 22 so that the fumes pass through the by-pass branch 20 in the event that the analyzer 40, 41 detects mercury concentration in fumes above a predetermined threshold value, and
- close the by-pass valves 21, 22 so as to prevent the transit of fumes through the by-pass branch 20 in the event that the analyzer 40, 41 detects a concentration of mercury in the fumes less than or equal to said predetermined threshold value, or in the event that, after a detection of a peak concentration above said predetermined threshold value, the average concentrations of mercury in the fumes may be estimated to fall within predefined average emission limits on a pre-established time basis.

In other words, the control system 50 of the plant is programmed to activate the mercury emissions abatement system 30 arranged in the by-pass branch 20 only on demand, thus avoiding continuous operation of said abatement system 30. The control system 50 is thus able to activate or deactivate the abatement system 30 depending on the actual mercury abatement needs detected by means of the mercury concentration analyzer(s).

Advantageously, in cases in which there is an analyzer 41 installed in the main fume treatment line, upstream of the by-pass branch (process analyzer), the control system 50 is programmed to activate or deactivate the mercury abatement system 30 (by opening or closing the by-pass branch 20) directly in response to the mercury concentration values detected by said analyzer in real time.

In the event that a single analyzer 40 arranged at the stack 12 is envisaged, the control system 50 is still programmed to activate the mercury abatement system 30 (by opening the by-pass branch 20) directly in response to mercury concentration values detected by said analyzer in real time when mercury concentrations above a predetermined threshold value (concentration peaks) are detected in the fumes. Conversely to the case in which a process analyzer is provided, with a stack-only analyzer the deactivation of the abatement system 30 does not occur in direct response to the detections of the sole analyzer arranged at the stack (which would immediately detect a concentration of Hg below the threshold after the system is activated), but rather, following the detection of a concentration peak, the mercury abatement system 30 is deactivated after a predefined period such that the average mercury concentrations in the fumes may be estimated to fall within pre-established average emission limits.

Preferably, in the event that the plant 1 is equipped with only one analyzer 40 arranged at the stack, following the detection of a peak mercury concentration, the activation time period of the mercury abatement system 30 (opening of the by-pass branch 20) is constrained to three parameters:
1) the magnitude of the peak detected (for example, 1000 ug/Nm3);
2)the allowed average emission limit (e.g., 20 ug/Nm3);
3) the time period for calculating the temporal emission average (e.g., semi-hourly average or daily average).

Based on the observed emission peak at the stack (thus implying that mercury emissions have exceeded the imposed limit, albeit for a short period) it will be necessary to keep the mercury abatement system 30 active as long as the average calculated time falls below the average permitted emission limit, compensating the initial overrun.

In the event that the main fume treatment line 10 is equipped with a shut-off valve 14 inserted between the inlet by-pass valve 21 and the stack 12 (as shown in Fig. 1 and 2), the control system 50 is connected to this shut-off valve 14 and is programmed to:
- close the shut-off valve 14 at the same time as opening the by-pass valves 21, 22 so that the fumes flow through the by-pass branch 20; and
- open the shut-off valve 14 at the same time as closing the by-pass valves 21, 22 so as to allow fumes to be emitted directly from the stack 12, preventing them from passing through the by-pass branch 20.

According to the invention, the plant 1 comprises a thermostatting system 26a, 29a and 26b, 29b of said mercury emissions abatement system 30.

Operationally, said thermostatting system 26a, 29a and 26b, 29b may be activated by the control system 50 to keep the fixed bed of chemi-adsorbents 31 within a predefined operating temperature range of 100°C to 250°C, at least when the by-pass valves 21, 22 are closed and the passage of fumes coming from the main line 10 through said by-pass branch 20 is prevented.

Included in the temperature range of 100°C to 250°C are the operating conditions at which the mercury emissions abatement system 30 may be called upon to treat the fumes from the main fume treatment line 10. In other words, due to the thermostatting system 26a, 29a and 26b, 29b, the mercury emissions abatement system 30, when placed in stand-by (i.e., with the by-pass branch 20 closed), is maintained in a thermal state substantially corresponding to the thermal state in which said mercury emissions abatement system 30 will be when placed in active operation (i.e., with the by-pass branch 20 open). Thus, in the transition from stand-by operation to active operation, the mercury abatement system 30 will not be subjected to significant temperature changes, or at least will be subjected to smaller temperature changes than those at which mercury abatement systems installed in traditional fume treatment plants are normally expected to operate.

In particular, due to the thermostatting of the mercury emissions abatement system 30, significant temperature changes to the fixed bed of chemi-adsorbents 31 are avoided in the transitions between stand-by operation and an active operation.

Said increased thermal stability reduces the risk of thermal conditions conducive to igniting fires (bed fires or hot spots) occurring in the fixed bed of chemi-adsorbents 31. In particular, sudden and major temperature changes due to the passage of fumes from the main fume treatment line 20 are avoided.

It should also be noted that thermostatting within the temperature range of 100°C to 250°C serves the dual purpose of both keeping the system above the dew point of the fumes (to avoid cold spots on which acid condensate would form) and keeping the fixed bed of chemi-adsorbents within an acceptable operating temperature range for good operation.

Due to the invention, the fume treatment plant 1 may be made to operate on demand while being efficiently and safely operated, particularly reducing the risk of bed fires.

Preferably, the aforesaid default operating temperature range is between 105°C and 140°C, and even more preferably between 120°C and 130°C. Said temperature ranges define in fact the temperatures at which the fumes from the main treatment line are normally fed to the stack. This choice further reduces thermal surges between fumes and the mercury abatement system 30, as well as the related by-pass branch 20. Thus, in addition to even more dramatically reducing thermal changes between fumes and the fixed bed (achieving higher efficiency in chemi-adsorption and lower risk of bed fires), the risk of acid condensate formation within the by-pass branch is also reduced.

Advantageously, as pointed out earlier, the main fume treatment line 10 may be equipped with at least one recuperative heat exchanger 13 that is suitable for recovering heat from the fumes before it enters the stack 12. Preferably, said recuperative heat exchanger 13 is inserted upstream of said by-pass branch 20 and is controlled by the control system 50 such that said at least one recuperative heat exchanger 13 cools the fumes to bring them within said predefined operating temperature range established according to the invention for thermostatting the mercury emissions abatement system 30.

Advantageously, as shown in the attached figures, the by-pass branch 20 comprises ventilation means 25. Preferably said ventilation means 25 consist of at least one booster fan.

The control system 50 is connected to said ventilation means 25.

Preferably, the control system 50 is programmed to activate said ventilation means 25 at least when the by-pass valves 21, 22 are open and the fumes are allowed to pass through the by-pass branch 20. The activation of the ventilation means 25 is functional to overcome fume pressure losses through the by-pass branch 20 and the mercury abatement system 30.

According to a preferred embodiment of the invention, shown in Fig. 1 and 2 and in Fig. 3, the by-pass branch (20) comprises a recirculation line 23 connecting a segment of said by-pass branch 20 immediately downstream of said inlet by-pass valve 21 to a segment of said by-pass branch 20 immediately upstream of said outlet by-pass valve 22 to create a closed circuit in said by-pass branch.

The by-pass branch 20 further comprises a recirculation valve 24 that is inserted into the recirculation line 23 and consists of a shut-off valve.

The control system 50 is connected to said recirculation valve 24 and is programmed to:
- open the recirculation valve 24 when the by-pass valves 21, 22 are closed and the passage of the fumes from the main line through the by-pass branch 20 is prevented (i.e., when the mercury emissions abatement system 30 is in stand-by operation);
- close the recirculation valve 24 when the by-pass valves 21, 22 are open and fumes are allowed to pass from the main fume line 10 through said by-pass branch 20 (i.e., when the mercury emissions abatement system 30 is in active operation).

Advantageously, the control system 50 is programmed to activate the aforesaid ventilation means 25 when the by-pass valves 21, 22 are closed and the recirculation valve 24 is open to allow the fumes contained in the by-pass branch to recirculate in said closed circuit.

The recirculation of the fumes contained in the by-pass branch 20 through the closed circuit and then through the mercury emissions abatement system 30 allows two significant operational advantages to be achieved.

A first operational advantage arises from the fact that, due to the recirculation of the fumes, in stand-by operation the fixed bed of chemi-adsorbents 31 is exposed to an oxygen concentration substantially equivalent to that in which the fixed bed is exposed in active operation. In fact, the fumes that are contained (trapped) in the by-pass branch after its closure and recirculated in the closed circuit maintain on average an oxygen content equivalent to that of the fumes passing through the main fume treatment line 10. Therefore, in the transition from stand-by to active operation, the fixed bed of chemi-adsorbents 31 will not be subjected to changes in oxygen concentration. This avoids sudden and abrupt changes in the oxygen content of the fumes, which are particularly dangerous if accompanied by increases in the temperature of said fumes.

This, combined with the fact that the fixed bed is in a thermally stable condition due to thermostatting, reduces the risk of igniting fires in a very significant way.

A second operational advantage comes from the fact that, due to the recirculation of the fumes, even in stand-by operation, the fixed bed of chemi-adsorbents 31 is continuously penetrated by a flow of fumes. The flow of fumes through the entire fixed bed facilitates a more even distribution of heat within the fixed bed. Therefore, in the event that there are hot spots inside the fixed bed, the flow of fumes will tend to cool them by distributing the heat to the cooler areas of said bed. All this improves thermal stability, further helping to reduce the risk of igniting fires.

Advantageously, as shown in the attached figures, the plant 1 comprises a flow meter 28 that is installed in the by-pass branch 20 and is connected to the control system 50.

The control system 50 is programmed to control the opening and closing of the outlet by-pass valve 22 in order to regulate, through the flow meter 28 and the ventilation means 25, the flow rate of fumes recirculating in the closed circuit. Specifically, the control system 50 is programmed to regulate the operation of the ventilation means, for example, by adjusting the rotation speed of the fan 25 to the required recirculation rate.

According to the preferred embodiment of the invention shown in Fig. 1 and 2, the thermostatting system comprises:
- at least one heat exchanger 26a that is inserted in the by-pass branch 20 and is capable of exchanging heat directly with the fumes passing through or recirculating in the by-pass branch 20; and
- at least one temperature sensor 29a that is connected to the control system 50 and installed in said by-pass branch to detect the temperature of fumes passing through or recirculating in said by-pass branch 20.

The control system 50 is programmed to activate the aforesaid at least one heat exchanger 26a as a function of the temperatures detected by said temperature sensor 29a when said by-pass valves 21, 22 are closed and said recirculation valve 24 is open, so as to thermostat the mercury abatement system 30, allowing the fumes contained in the by-pass branch to act as a heat carrier between the heat exchanger 26a and the mercury abatement system 30 and the by-pass branch 20, while recirculating in said closed circuit.

Preferably, as shown in Fig. 1 and 2 the heat exchanger 26a is arranged downstream of the mercury emissions abatement system 30. The ventilation means 25 are installed between the abatement system 30 and the heat exchanger 26a. The temperature sensor 29a is installed downstream of the heat exchanger 26a.

Preferably, as noted earlier, the mercury abatement system 30 comprises a containment structure 32 defining an inner chamber 33 that is fluidically connected to the by-pass branch and in which the fixed bed of chemi-adsorbents 31 is placed.

According to the alternative embodiment shown in Fig. 3, the thermostatting system comprises:
- at least one heat exchanger 26b that is associated with the containment structure 32 of the mercury emissions abatement system 30 and is suitable for exchanging heat with the fixed bed of chemi-adsorbents 31; and
- at least one temperature sensor 29b that is connected to the control system 50 and is installed inside the containment structure 32.

Preferably, said heat exchanger 26b may consist of electric coils or fluid circulation coils (steam or other carrier fluid) associated with the containment structure 32. Heat exchange between the heat exchanger 26b and the fixed bed occurs by intermediation of the containment structure 32, thus preventing the chemi-adsorbents 31 from being in direct contact with the heat exchanger 26b. In this way, the risk of localized hot spots within the fixed bed is reduced.

The control system 50 is programmed to activate the heat exchanger 26b associated with said containment structure 32 as a function of the temperatures detected by the temperature sensor 29b, so as to thermostat the mercury abatement system 30 when the by-pass valves 21, 22 are closed and said recirculation valve 24 is open.

Advantageously, in the event that the thermostatting system comprises a heat exchanger 26b that is associated with the containment structure 32 of the mercury emissions abatement system 30, thermostatting may be conducted either without recirculation of the fumes in the by-pass branch 20 or with recirculation of the fumes in the by-pass branch 20. This second option is preferred because it provides a better distribution of the heat transfer in the fixed bed of chemi-adsorbents.

As pointed out previously, the fumes recirculating in the closed circuit of said by-pass branch 20 pass through the fixed bed of chemi-adsorbents 31, distributing the heat exchange through the fixed bed of chemi-adsorbents 31 and the by-pass branch 20 more homogeneously. Heat exchange may take place in both directions: on the one hand, by recirculating fumes, heat may be supplied to the fixed bed, compensating for any thermal dissipation; on the other, if a localized hot spot is occurring in the fixed bed, the homogeneous distribution of fumes allows excess heat to be removed, limiting the hot spot and thus reducing the risk of fires (bed fires).

According to an embodiment not shown in the attached figures, as an alternative to, or in combination with, the heat exchanger 26b associated with the containment structure 32, the thermostatting system may comprise a heat exchanger associated with the ducts forming the by-pass branch 20. Also in this case, said heat exchanger is preferably made up of electrical coils or fluid circulation coils. In this case, thermostatting is carried out with additional heat exchange between the recirculating fumes and the duct walls in the by-pass branch 20.

Advantageously, the plant 1, and in particular the by-pass branch with its associated mercury emissions abatement system, is sealed so as to minimize fumes and/or ambient air leakage. In particular, this prevents leakage of (oxygen-rich) air through the walls of the ducts or the containment structure 32 containing the fixed bed 31.

Advantageously, as shown in the attached figures, the plant 1 may comprise a carbon monoxide (CO) differential meter 27 between the inlet and outlet of the mercury emissions abatement system 30. Said CO differential meter 27 is suitable to promptly detect the possible ignition of a fire (hot spot or bed fire). In fact, if the CO concentration at the outlet is higher than that at the inlet, it could indicate the formation of a fire in the fixed bed of chemi-adsorbents 31.

Advantageously, the plant 1 may comprise a gaseous inerting system for the mercury emissions abatement system 30, preferably with nitrogen injection, to be used to defuse any nascent fire.

Advantageously, as shown in the attached figures, the plant 1 may comprise a pressure gauge 29c that is connected to the outlet by-pass valve 22 and the control system 50. Said control system is programmed to open the outlet by-pass valve 22 in order to evacuate fumes in the event of excessive pressure conditions within the by-pass branch.

The operation of the fume treatment plant 1 according to the invention will now be described, with reference to the attached Fig. 1 and 2 and according to a preferred form of operation.

First, the operation of the system in the event of switching from the stand-by operating condition to the active operating condition of the mercury emissions abatement system 30 will be described.

When the mercury concentration analyzer 40 (installed on the stack) and/or 41 (process, installed on the fume line) detects mercury concentration in the fumes in excess of the allowed value, the mercury emissions abatement system 30 is activated by opening the by-pass branch 20:
- the by-pass and inlet valve 21 is opened, diverting fumes through the mercury emissions abatement system 30 inside the filter;
- the outlet by-pass valve 22 opens;
- the recirculation valve 23 gradually closes, preventing the recirculation of the fumes in the by-pass branch (i.e., the closed circuit is interrupted);
- the main fume line is gradually shut off by closing the shut-off valve 14;
- the speed of the booster fan 25 according to the flow rate of fumes flowing through the mercury emissions abatement system 30 is adjusted;
- the thermostatting system 26a, 29a and 26b, 29b is deactivated;
- fumes entering the mercury emissions abatement system 30 pass through the fixed bed of chemi-adsorbents 31, yielding mercury by chemi-adsorption;
- the purified fumes are then sent to the stack 12 and emitted into the atmosphere.

The aforesaid sequence of operations is a preferred sequence, but it is not unique, and other combinations of operations may be used. After the commissioning phase of the plant 1, there will follow a refinement (tuning) phase aimed at defining the time interval, if any, between one operation and the next and the speed at which they are implemented. This refinement phase typically occurs during the trial (commissioning) period of the plant. As already pointed out, the operation of the plant 1 will still be managed through the control system 50, which regulates the time steps and opening/closing speeds of the valves and regulation of the other components (fan and heat exchanger).

The operation of the system in the event of switching from the active operating condition to the stand-by operating condition of the mercury emissions abatement system 30 will now be described.

When the analyzers indicate a concentration of mercury in the fumes such that the mercury emissions abatement system 30 may be deactivated, i.e., after a sufficiently long period such that, based on the magnitude of the initially detected emission peak and the imposed average limit (e.g., 20 ug/Nm3 on the daily average), it is expected that the concentration of Hg in the fumes has returned below the threshold value, the following operations take place:
- the shut-off valve 14 along the main fume line 10 is gradually reopened;
- the recirculation valve 23 is reopened, generating a closed recirculation circuit within the by-pass branch 20;
- the inlet by-pass valve 21 is gradually closed: in this way, the fumes from the main line 10 flow back down the main duct, toward the stack 12;
- the flow rate of fumes recirculating in the closed circuit of the by-pass branch 20 is adjusted, evacuating a part thereof to the stack 12: at a lower flow rate, the rotational speed of the booster fan may be reduced, thus reducing the power absorbed (which is proportional to the cube of the fluid flow rate);
- once the required recirculation flow rate is reached, the outlet by-pass valve 22 closes;
- the thermostatting system 26a, 29a and 26b, 29b is reactivated to compensate for system heat dissipation and to keep recirculation fumes at temperature (preferably around 120°C).

Also in this case, the above sequence of operations is a preferred sequence, but it is not unique and other combinations of operations may be used.

From the analysis of the emissions history of several existing fume treatment plants, in light of a limit of 20 ug/Nm3 for existing plants, the mercury emissions abatement system 30 would be operational 10-30% of the time in a year, while remaining on stand-by during the remaining time, thus containing the fouling of the fixed bed, the electrical power consumption, and the chemi-adsorbent consumption.

A subject of the present invention is a method for abating mercury emissions in a fume treatment plant.

The method according to the invention is applied to a fume treatment plant equipped with a mercury emissions abatement system with a fixed bed of chemi-adsorbents, in particular such as the one covered by the present invention and particularly as described above. For this reason, the method is described below using the same numerical references used to describe the fume treatment plant 1. For the description of the fume treatment plant to which the method according to the invention applies, reference is made to the previous description of the plant 1. Moreover, the advantages obtainable by the method according to the invention are the same as those described in connection with the plant 1. For simplicity of exposition, the advantages of the method according to the invention will not be described again.

According to a general embodiment of the invention, the method for abating mercury emissions in a fume treatment plant 1 comprise the following operational steps:
- a) monitoring the concentration of mercury in the fumes flowing into said main fume treatment line 10 so as to detect any peak mercury concentration above a predetermined threshold value;
- b) diverting the fumes through the by-pass branch 20 in the event that a peak mercury concentration is detected in the fumes such that the fumes pass through the mercury emissions abatement system 30; and
- c) preventing the passage of fumes through the by-pass branch 20 in the event that a peak concentration of mercury is not detected in the fumes or in the event, after a peak concentration detection, that the average concentrations of mercury in the fumes on a predefined time basis may be estimated to fall within pre-established average emission limits.

According to the invention, the method comprises the step of thermostatting the mercury emissions abatement system 30 containing the fixed bed of chemi-adsorbents 31 to maintain it within a predefined operating temperature range of 100°C to 250°C, at least during the aforesaid step c) wherein the passage of fumes through the by-pass branch 20 is prevented.

Preferably, the aforesaid default operating temperature range is between 105°C and 140°C, and preferably between 120°C and 130°C.

Preferably, during the aforesaid step b) of diverting fumes through the by-pass branch 20, the ventilation means 25 are activated so as to overcome the pressure loss of fumes through the by-pass branch 20 and the mercury abatement system 30.

Preferably, during step c) of preventing the passage of fumes through the by-pass branch 20, a closed circuit is created in the by-pass branch 20, and said ventilation means 25 are activated and adjusted according to the flow meter 28 to allow fumes contained in the by-pass branch to recirculate in the closed circuit.

According to a preferred embodiment, the thermostatting of said mercury abatement system 30 is carried out by at least one heat exchanger 26a which is inserted into said by-pass branch 20 and is suitable for exchanging heat directly with the fumes recirculating in said closed circuit of the by-pass branch 20, so as to enable the fumes contained in the by-pass branch to act as a heat carrier between the exchanger 26a and the by-pass branch 20 and said mercury abatement system 30 while they recirculate in said closed circuit.

According to an alternative embodiment, thermostatting of said mercury abatement system 30 is carried out by means of a heat exchanger that is associated with the containment structure 32 of the mercury abatement system 30.

Advantageously, the fumes recirculating in the closed circuit of said by-pass branch 20 pass through the fixed bed of chemi-adsorbents 31 more homogeneously, distributing the heat exchange through the fixed bed and the by-pass branch 20.

Advantageously, the method may comprise a step d) of recovering heat from the fumes prior to their entry into the stack 12 via at least one recuperative heat exchanger 13 that is inserted into the main fume treatment line 10 upstream of said by-pass branch 20 such that said at least one recuperative heat exchanger 13 cools the fumes to bring them within said predefined operating temperature range.

The invention achieves numerous advantages which have already been described in part.

The fume treatment plant 1 equipped with a mercury emissions abatement system with a fixed bed of chemi-adsorbents according to the invention may be made to operate on demand and at the same time may be operated efficiently and safely, reducing in particular the risk of bed fires.

The fume treatment plant 1 according to the invention may be made to operate on demand and is both operationally reliable and simple to operate.

The fume treatment plant 1 according to the invention may be made to operate on demand and at the same time does not result in a significant increase in plant and operating costs.

The mercury emissions abatement method in a fume treatment plant according to the invention enables on-demand management of mercury emission peaks in an efficient and at the same time safe manner, reducing in particular the risk of bed fires.

The invention thus conceived therefore achieves its intended purposes.

## Claims

1. Fume treatment plant (1) comprising:
- a main fume treatment line (10) which is provided with at least one filtering device (11) and a stack (12) to discharge the treated fumes into the environment;
- a by-pass branch (20) of said main fume treatment line (10) which is positioned downstream of said at least one filtering device (11) and is fluidically connectable to said main fume treatment line (10) by means of an inlet by-pass valve (21) and an outlet by-pass valve (22);
- a system (30) for abating mercury emissions, comprising a fixed bed of chemi-adsorbents (31) fluidically inserted in said by-pass branch (20);
- at least one mercury concentration analyzer (40, 41), which in use is suitable to detect the concentration of mercury in the fumes flowing through said main fume treatment line (10);
- a control system (50) which is connected to said at least one mercury concentration analyzer (40, 41) and to said inlet (21) and outlet (22) by-pass valves and is programmed to:
- open said by-pass valves (21, 22) in order to let the fumes flow through said by-pass branch (20) if the analyzer (40, 41) detects a mercury concentration in the fumes higher than a predetermined threshold value, and
- close said by-pass valves (21, 22) so as to prevent the flow of fumes through said by-pass branch (20), if the analyzer (40, 41) detects a mercury concentration in the fumes lower than or equal to said predetermined threshold value, or if, after a peak concentration detection higher than said predetermined threshold value, the average mercury concentrations in the fumes may be estimated to fall within pre-established average emission limits on a predefined time basis,
**characterized in that** it comprises a thermostatting system (26a, 29a; 26b, 29b) of said system (30) for abating mercury emissions, wherein said thermostatting system (26a, 29a; 26b, 29b) is activatable by said control system (50) to maintain the fixed bed of chemi-adsorbents (31) within a predefined operating temperature range between 100°C and 250°C, at least when said by-pass valves (21, 22) are closed and the flow of fumes coming from the main line (10) through said by-pass branch (20) is prevented.

2. The fume treatment plant (1) according to claim 1, wherein said predefined operating temperature range is between 105°C and 140°C, and preferably between 120°C and 130°C.

3. The fume treatment plant (1) according to claim 1 or 2, wherein said chemi-adsorbents comprise activated carbon and/or lignite coke, impregnated with sulfides, and/or bromides, and/or iodides, preferably in the form of pellets, wherein preferably said chemi-adsorbents are suitable to operate a chemi-adsorption of the mercury in a temperature range of 90°C to 180°C, and preferably 120°C to 130°C.

4. The fume treatment plant (1) according to any of the preceding claims, wherein said by-pass branch (20) comprises ventilation means (25) and wherein said control system (50) is connected to said ventilation means (25).

5. The fume treatment plant (1) according to claim 4, wherein said control system (50) is programmed to activate said ventilation means (25) when said by-pass valves (21, 22) are open and the fumes are allowed to flow through said by-pass branch (20) so as to overcome fume pressure losses through said by-pass branch (20) and said mercury abatement system (30).

6. The fume treatment plant (1) according to claim 4 or 5, wherein said by-pass branch (20) comprises a recirculation line (23) connecting a section of said by-pass branch (20) immediately downstream of said inlet by-pass valve (21) to a section of said by-pass branch (20) immediately upstream of said outlet by-pass valve (22) to create a closed circuit in said by-pass branch,
wherein said by-pass branch (20) comprises a recirculation valve (24) inserted in said recirculation line (23), said control system (50) being connected to said recirculation valve (24) and being programmed to: - open said recirculation valve (24) when said by-pass valves (21, 22) are closed and the flow of fumes through said by-pass branch (20) is prevented; - close said recirculation valve (24) when said by-pass valves (21, 22) are open and the flow of fumes from the main fume line (10) through said by-pass branch (20) is allowed,
and wherein said control system (50) is programmed to activate said ventilation means (25) when said by-pass valves (21, 22) are closed and said recirculation valve (24) is open to allow the fumes contained in the by-pass branch to recirculate in said closed circuit.

7. The fume treatment plant (1) according to claim 6, wherein said plant (1) comprises a flow meter (28) which is installed in said by-pass branch (20) and is connected to said control system (50), and wherein said control system (50) is programmed to control the opening and closing of the outlet by-pass valve (22) so as to regulate, via the flow meter (28) and the ventilation means (25), the flow rate of the fumes recirculating in said closed circuit.

8. The fume treatment plant (1) according to claim 6 or 7, wherein said thermostatting system comprises:
- at least one heat exchanger (26a) which is inserted in said by-pass branch (20) and is suitable to exchange heat directly with the fumes flowing or recirculating in said by-pass branch (20); and
- at least one temperature sensor (29a) which is connected to said control system (50) and is installed in said by-pass branch to detect the temperature of the fumes flowing or recirculating in said by-pass branch (20),
and wherein said control system (50) is programmed to activate said at least one heat exchanger (26a) depending on temperatures detected by said temperature sensor (29a), when said by-pass valves (21, 22) are closed and said recirculation valve (24) is open, so as to thermostat the mercury abatement system (30), allowing the fumes contained in said by-pass branch to act as a heat carrier between exchanger (26a) and mercury abatement system (30) and by-pass branch (20), while they recirculate in said closed circuit.

9. The fume treatment plant (1) according to any of the preceding claims, wherein said mercury abatement system (30) comprises a containment structure (32) defining an inner chamber (33) which is fluidically connected to said by-pass branch and in which said fixed bed of chemi-adsorbents (31) is placed,
and wherein said thermostatting system comprises:
- at least one heat exchanger (26b) that is associated with said containment structure (32) and is suitable to exchange heat with the fixed bed of chemi-adsorbents (31); and
- at least one temperature sensor (29b) that is connected to said control system (50) and is installed in said containment structure (32),
and wherein said control system (50) is programmed to activate said heat exchanger associated with said containment structure (32) depending on temperatures detected by said temperature sensor (29b), so as to thermostat said mercury abatement system (30) when said by-pass valves (21, 22) are closed and said recirculation valve (24) is open.

10. The fume treatment plant (1) according to claim 6 or 7 and claim 8 or 9, wherein the fumes recirculating in said closed circuit of said by-pass branch (20) pass through said fixed bed of chemi-adsorbents (31) distributing the heat exchange through the fixed bed of chemi-adsorbents (31) and the by-pass branch (20) more homogeneously.

11. The fume treatment plant (1) according to any of the preceding claims, wherein the main fume treatment line (10) is provided with at least one recuperative heat exchanger (13) which is inserted upstream of said by-pass branch (20) and is suitable to recover heat from the fumes before they enter the stack (12), and wherein said at least one recuperative heat exchanger (13) is controlled by the control system (50) in such a way that said at least one recuperative heat exchanger (13) cools the fumes to bring them within said predefined operating temperature range.

12. The fume treatment plant (1) according to any of the preceding claims, wherein the main fume treatment line (10) is provided with a shut-off valve (14) inserted between the inlet by-pass valve (21) and the stack (12) and wherein said control system (50) is connected to said shut-off valve (14) and is programmed to:
- close said shut-off valve (14) at the same time as opening said by-pass valves (21, 22) so that the fumes flow through said by-pass branch (20)
- open said shut-off valve (14) at the same time as closing said by-pass valves (21, 22) so as to allow fumes to be emitted directly from the stack (12), preventing them from flowing through said by-pass branch (20).

13. The fume treatment plant (1) according to any of the preceding claims, wherein said at least one mercury concentration analyzer (40) is installed in the stack (12) .

14. The fume treatment plant (1) according to any of the preceding claims, comprising two mercury concentration analyzers (40, 41), wherein a first mercury concentration analyzer (40) is installed in the stack (12) and a second mercury concentration analyzer (41) is installed in the main fume treatment line (10) upstream of the by-pass branch (20), wherein both said analyzers (40, 41) are connected to said control system (50).

15. A method of abating mercury emissions in a fume treatment plant according to one or more of the preceding claims, comprising the following operating steps:
- (a) monitoring the concentration of mercury in the fumes flowing into said main fume treatment line (10) to detect any peak mercury concentration above a predetermined threshold value;
- (b) diverting the fumes through the by-pass branch (20) in case a peak mercury concentration is detected in the fumes; and
- (c) preventing fumes from flowing through the by-pass branch (20) if no peak mercury concentration is detected in the fumes or if, after a peak concentration detection, the average mercury concentrations in the fumes over a defined time period may be estimated to be within specified average emission limits,
**characterized by** thermostatting said mercury abatement system (30), containing said fixed bed of chemi-adsorbents (31) to keep it within a predefined operating temperature range between 100°C and 250°C, at least during said step c) in which the flow of fumes through the by-pass branch (20) is prevented.

16. The method according to claim 15, wherein said predefined operating temperature range is between 105°C and 140°C, and preferably between 120°C and 130°C.

17. The method according to claim 15 or 16, wherein, during said step b) of diverting the fumes through the by-pass branch (20), said ventilation means (25) are activated so as to overcome the pressure losses of the fumes through said by-pass branch (20) and the mercury abatement system (30).

18. The method according to claim 15, 16 or 17, wherein during said step c) of preventing the flow of fumes through the by-pass branch (20) a closed circuit is created in the by-pass branch (20) and said ventilation means (25) are activated and adjusted according to the flow meter (28) to allow the fumes contained in the by-pass branch to recirculate in said closed circuit.

19. The method according to claim 18, wherein the thermostatting of said mercury abatement system (30) is performed by at least one heat exchanger (26a) which is inserted in said by-pass branch (20) and is suitable to exchange heat directly with the fumes recirculating in said closed circuit of said by-pass branch (20), so as to allow the fumes contained in said by-pass branch to act as a heat carrier between exchanger (26a) and by-pass branch (20) and said mercury abatement system (30), while they recirculate in said closed circuit.

20. The method according to any of the claims from 15 to 19, wherein the thermostatting of said mercury abatement system (30) is carried out by means of a heat exchanger which is associated with the containment structure (32) of the mercury abatement system (30).

21. The method according to claim 18 and claim 19 or 20, wherein the fumes recirculating in said closed circuit of said by-pass branch (20) flow through said fixed bed of chemi-adsorbents (31) distributing the heat transfer through the fixed bed and the by-pass branch (20) more homogeneously.

22. The method according to any of the claims from 15 to 21, comprising a step d) of recovering heat from the fumes prior to their entry into the stack (12) by means of at least one recuperative heat exchanger (13) which is inserted in the main fume treatment line (10) upstream of said by-pass branch (20) such that said at least one recuperative heat exchanger (13) cools the fumes to bring them within said predefined operating temperature range.

## Patentansprüche

1. Rauchgasbehandlungsanlage (1), umfassend:
- eine Hauptrauchgasbehandlungsleitung (10), welche mit wenigstens einer Filtervorrichtung (11) und einem Schornstein (12) zum Abgeben der behandelten Rauchgase in die Umgebung bereitgestellt ist;
- einen Bypass-Zweig (20) der Hauptrauchgasbehandlungsleitung (10), welcher stromabwärts der wenigstens einen Filtervorrichtung (11) positioniert ist und mittels eines Einlass-Bypass-Ventils (21) und eines Auslass-Bypass-Ventils (22) fluidisch mit der Hauptrauchgasbehandlungsleitung (10) verbindbar ist;
- ein System (30) zum Verringern von Quecksilberemissionen, welches ein Festbett aus chemisch adsorbierenden Stoffen (31) umfasst, das fluidisch in den Bypass-Zweig (20) eingefügt ist;
- wenigstens eine Quecksilberkonzentrationsanalyseeinrichtung (40, 41), welche in Verwendung dazu geeignet ist, die Konzentration von Quecksilber in den Rauchgasen zu detektieren, welche durch die Hauptrauchgasbehandlungsleitung (10) strömen;
- ein Steuersystem (50), welches mit der wenigstens einen Quecksilberkonzentrationsanalyseeinrichtung (40, 41) und mit dem Einlass- (21) und dem Auslass- (22) Bypass-Ventil verbunden ist und programmiert ist zum:
- Öffnen der Bypass-Ventile (21, 22), um die Rauchgase durch den Bypass-Zweig (20) strömen zu lassen, wenn die Analyseeinrichtung (40, 41) eine Quecksilberkonzentration in den Rauchgasen detektiert, welche höher als ein vorbestimmter Schwellenwert ist, und
- Schließen der Bypass-Ventile (21, 22), um die Strömung von Rauchgasen durch den Bypass-Zweig (20) zu verhindern, wenn die Analyseeinrichtung (40, 41) eine Quecksilberkonzentration in den Rauchgasen detektiert, welche niedriger als oder gleich wie der vorbestimmte Schwellenwert ist, oder wenn nach einer Spitzenkonzentrationsdetektion, welche höher als der vorbestimmte Schwellenwert ist, geschätzt werden kann, dass die durchschnittlichen Quecksilberkonzentrationen in den Rauchgasen auf einer vordefinierten Zeitbasis innerhalb von vorher festgelegten durchschnittlichen Emissionsgrenzen liegen,
**dadurch gekennzeichnet, dass** sie ein Thermostatisierungssystem (26a, 29a; 26b, 29b) des Systems (30) zum Verringern von Quecksilberemissionen umfasst, wobei das Thermostatisierungssystem (26a, 29a; 26b, 29b) durch das Steuersystem (50) aktivierbar ist, um das Festbett aus chemisch adsorbierenden Stoffen (31) innerhalb eines vordefinierten Betriebstemperaturbereichs zwischen 100 °C und 250 °C zu halten, wenigstens wenn die Bypass-Ventile (21, 22) geschlossen sind und die Strömung von Rauchgasen, welche aus der Hauptleitung (10) kommen, durch den Bypass-Zweig (20) verhindert wird.

2. Rauchgasbehandlungsanlage (1) nach Anspruch 1, wobei der vordefinierte Betriebstemperaturbereich zwischen 105 °C und 140 °C, und vorzugsweise zwischen 120 °C und 130 °C, liegt.

3. Rauchgasbehandlungsanlage (1) nach Anspruch 1 oder 2, wobei die chemisch adsorbierenden Stoffe Aktivkohle und/oder Braunkohlenkoks umfassen, imprägniert mit Sulfiden und/oder Bromiden und/oder iodiden, vorzugsweise in der Form von Pellets, wobei vorzugsweise die chemisch adsorbierenden Stoffe dazu geeignet sind, eine chemische Adsorption des Quecksilbers in einem Temperaturbereich von 90 °C bis 180 °C, und vorzugsweise 120 °C bis 130 °C, zu bewirken.

4. Rauchgasbehandlungsanlage (1) nach einem der vorhergehenden Ansprüche, wobei der Bypass-Zweig (20) Ventilationsmittel (25) umfasst und wobei das Steuersystem (50) mit den Ventilationsmitteln (25) verbunden ist.

5. Rauchgasbehandlungsanlage (1) nach Anspruch 4, wobei das Steuersystem (50) dazu programmiert ist, die Ventilationsmittel (25) zu aktivieren, wenn die Bypass-Ventile (21, 22) offen sind und ermöglicht ist, dass die Rauchgase durch den Bypass-Zweig (20) strömen, um Rauchgasdruckverluste durch den Bypass-Zweig (20) und das Quecksilberverringerungssystem (30) zu überwinden.

6. Rauchgasbehandlungsanlage (1) nach Anspruch 4 oder 5, wobei der Bypass-Zweig (20) eine Rezirkulationsleitung (23) umfasst, welche einen Abschnitt des Bypass-Zweigs (20) unmittelbar stromabwärts des Einlass-Bypass-Ventils (21) mit einem Abschnitt des Bypass-Zweigs (20) unmittelbar stromaufwärts des Auslass-Bypass-Ventils (22) verbindet, um einen geschlossenen Kreislauf in dem Bypass-Zweig zu schaffen,
wobei der Bypass-Zweig (20) ein Rezirkulationsventil (24) umfasst, welches in der Rezirkulationsleitung (23) eingefügt ist, wobei das Steuersystem (50) mit dem Rezirkulationsventil (24) verbunden ist und programmiert ist zum:
- Öffnen des Rezirkulationsventils (24), wenn die Bypass-Ventile (21, 22) geschlossen sind und die Strömung von Rauchgasen durch den Bypass-Zweig (20) verhindert ist;
- Schließen des Rezirkulationsventils (24), wenn die Bypass-Ventile (21, 22) offen sind und die Strömung von Rauchgasen aus der Hauptrauchgasleitung (10) durch den Bypass-Zweig (20) ermöglicht ist,
und wobei das Steuersystem (50) dazu programmiert ist, die Ventilationsmittel (25) zu aktivieren, wenn die Bypass-Ventile (21, 22) geschlossen sind und das Rezirkulationsventil (24) offen ist, um zu ermöglichen, dass die Rauchgase, welche in dem Bypass-Zweig enthalten sind, in dem geschlossenen Kreislauf rezirkulieren.

7. Rauchgasbehandlungsanlage (1) nach Anspruch 6, wobei die Anlage (1) eine Strömungsmesseinrichtung (28) umfasst, welche in dem Bypass-Zweig (20) installiert ist und mit dem Steuersystem (50) verbunden ist, und wobei das Steuersystem (50) dazu programmiert ist, das Öffnen und das Schließen des Auslass-Bypass-Ventils (22) zu steuern, um die Strömungsrate der Rauchgase, welche in dem geschlossenen Kreislauf rezirkulieren, über die Strömungsmesseinrichtung (28) und die Ventilationsmittel (25) zu regulieren.

8. Rauchgasbehandlungsanlage (1) nach Anspruch 6 oder 7, wobei das Thermostatisierungssystem umfasst:
- wenigstens einen Wärmetauscher (26a), welcher in den Bypass-Zweig (20) eingefügt ist und dazu geeignet ist, Wärme direkt mit den Rauchgasen zu tauschen, welche in dem Bypass-Zweig (20) strömen oder rezirkulieren; und
- wenigstens einen Temperatursensor (29a), welcher mit dem Steuersystem (50) verbunden ist und in dem Bypass-Zweig installiert ist, um die Temperatur der Rauchgase zu detektieren, welche in dem Bypass-Zweig (20) strömen oder rezirkulieren,
und wobei das Steuersystem (50) dazu programmiert ist, den wenigstens einen Wärmetauscher (26a) in Abhängigkeit von durch den Temperatursensor (29a) detektierten Temperaturen zu aktivieren, wenn die Bypass-Ventile (21, 22) geschlossen sind und das Rezirkulationsventil (24) offen ist, um das Quecksilberverringerungssystem (30) zu thermostatisieren, wodurch ermöglicht wird, dass die Rauchgase, welche in dem Bypass-Zweig enthalten sind, als ein Wärmeträger zwischen dem Tauscher (26a) und dem Quecksilberverringerungssystem (30) und dem Bypass-Zweig (20) wirken, während sie in dem geschlossenen Kreislauf rezirkulieren.

9. Rauchgasbehandlungsanlage (1) nach einem der vorhergehenden Ansprüche, wobei das Quecksilberverringerungssystem (30) eine Eingrenzungsstruktur (32) umfasst, welche eine innere Kammer (33) definiert, die fluidisch mit dem Bypass-Zweig verbunden ist und in der das Festbett aus chemisch adsorbierenden Stoffen (31) platziert ist,
und wobei das Thermostatisierungssystem umfasst:
- wenigstens einen Wärmetauscher (26b), welcher der Eingrenzungsstruktur (32) zugeordnet ist und dazu geeignet ist, Wärme mit dem Festbett aus chemisch adsorbierenden Stoffen (31) zu tauschen; und
- wenigstens einen Temperatursensor (29b), welcher mit dem Steuersystem (50) verbunden ist und in der Eingrenzungsstruktur (32) installiert ist,
und wobei das Steuersystem (50) dazu programmiert ist, den Wärmetauscher, welcher der Eingrenzungsstruktur (32) zugeordnet ist, in Abhängigkeit von durch den Temperatursensor (29b) detektierten Temperaturen zu aktivieren, um das Quecksilberverringerungssystem (30) zu thermostatisieren, wenn die Bypass-Ventile (21, 22) geschlossen sind und das Rezirkulationsventil (24) offen ist.

10. Rauchgasbehandlungsanlage (1) nach Anspruch 6 oder 7 und Anspruch 8 oder 9, wobei die Rauchgase, welche in dem geschlossenen Kreislauf des Bypass-Zweigs (20) rezirkulieren, das Festbett aus chemisch adsorbierenden Stoffen (31) passieren, wodurch der Wärmeaustausch durch das Festbett aus chemisch adsorbierenden Stoffen (31) und den Bypass-Zweig (20) homogener verteilt wird.

11. Rauchgasbehandlungsanlage (1) nach einem der vorhergehenden Ansprüche, wobei die Hauptrauchgasbehandlungsleitung (10) mit wenigstens einem rekuperativen Wärmetauscher (13) bereitgestellt ist, welcher stromaufwärts des Bypass-Zweigs (20) eingefügt ist und dazu geeignet ist, Wärme aus den Rauchgasen rückzugewinnen, bevor sie in den Schornstein (12) eindringen, und wobei der wenigstens eine rekuperative Wärmetauscher (13) in einer derartigen Weise durch das Steuersystem (50) gesteuert wird, dass der wenigstens eine rekuperative Wärmetauscher (13) die Rauchgase kühlt, um sie in den vordefinierten Betriebstemperaturbereich zu bringen.

12. Rauchgasbehandlungsanlage (1) nach einem der vorhergehenden Ansprüche, wobei die Hauptrauchgasbehandlungsleitung (10) mit einem Absperrventil (14) bereitgestellt ist, welches zwischen dem Einlass-Bypass-Ventil (21) und dem Schornstein (12) eingefügt ist, und wobei das Steuersystem (50) mit dem Absperrventil (14) verbunden ist und programmiert ist zum:
- Schließen des Absperrventils (14) zu der gleichen Zeit, zu welcher die Bypass-Ventile (21, 22) geöffnet sind, so dass die Rauchgase durch den Bypass-Zweig (20) strömen;
- Öffnen des Absperrventils (14) zu der gleichen Zeit, zu welcher die Bypass-Ventile (21, 22) geschlossen sind, um zu ermöglichen, dass Rauchgase direkt aus dem Schornstein (12) emittiert werden, wodurch verhindert wird, dass sie durch den Bypass-Zweig (20) strömen.

13. Rauchgasbehandlungsanlage (1) nach einem der vorhergehenden Ansprüche, wobei die wenigstens eine Quecksilberkonzentrationsanalyseeinrichtung (40) in dem Schornstein (12) installiert ist.

14. Rauchgasbehandlungsanlage (1) nach einem der vorhergehenden Ansprüche, umfassend zwei Quecksilberkonzentrationsanalyseeinrichtungen (40, 41), wobei eine erste Quecksilberkonzentrationsanalyseeinrichtung (40) in dem Schornstein (12) installiert ist und eine zweite Quecksilberkonzentrationsanalyseeinrichtung (41) stromaufwärts des Bypass-Zweigs (20) in der Hauptrauchgasbehandlungsleitung (10) installiert ist, wobei die beiden Analyseeinrichtungen (40, 41) mit dem Steuersystem (50) verbunden sind.

15. Verfahren zum Verringern von Quecksilberemissionen in einer Rauchgasbehandlungsanlage nach einem oder mehreren der vorhergehenden Ansprüche, umfassend die folgenden Betriebsschritte:
- (a) Überwachen der Konzentration von Quecksilber in den Rauchgasen, welche in die Hauptrauchgasbehandlungsleitung (10) strömen, um jegliche Spitzenquecksilberkonzentration oberhalb eines vorbestimmten Schwellenwerts zu detektieren;
- (b) Umleiten der Rauchgase durch den Bypass-Zweig (20) in einem Fall, dass eine Spitzenquecksilberkonzentration in den Rauchgasen detektiert wird; und
- (c) Verhindern, dass Rauchgase durch den Bypass-Zweig (20) strömen, wenn keine Spitzenquecksilberkonzentration in den Rauchgasen detektiert wird, oder wenn nach einer Spitzenkonzentrationsdetektion geschätzt werden kann, dass die durchschnittlichen Quecksilberkonzentrationen in den Rauchgasen über einen definierten Zeitraum innerhalb von spezifizierten durchschnittlichen Emissionsgrenzen liegen,
**gekennzeichnet durch** ein Thermostatisieren des Quecksilberverringerungssystems (30), welches das Festbett aus chemisch adsorbierenden Stoffen (31) enthält, um es innerhalb eines vordefinierten Betriebstemperaturbereichs zwischen 100 °C und 250 °C zu halten, wenigstens während des Schritts c), in welchem die Strömung von Rauchgasen durch den Bypass-Zweig (20) verhindert wird.

16. Verfahren nach Anspruch 15, wobei der vordefinierte Betriebstemperaturbereich zwischen 105 °C und 140 °C, und vorzugsweise zwischen 120 °C und 130 °C, liegt.

17. Verfahren nach Anspruch 15 oder 16, wobei während des Schritts b) eines Umleitens der Rauchgase durch den Bypass-Zweig (20) die Ventilationsmittel (25) aktiviert werden, um die Druckverluste der Rauchgase durch den Bypass-Zweig (20) und das Quecksilberverringerungssystem (30) zu überwinden.

18. Verfahren nach Anspruch 15, 16 oder 17, wobei während des Schritts c) eines Verhinderns der Strömung von Rauchgasen durch den Bypass-Zweig (20) ein geschlossener Kreislauf in dem Bypass-Zweig (20) geschaffen wird und die Ventilationsmittel (25) gemäß der Strömungsmesseinrichtung (28) aktiviert und eingestellt werden, um zu ermöglichen, dass die Rauchgase, welche in dem Bypass-Zweig (20) enthalten sind, in dem geschlossenen Kreislauf rezirkulieren.

19. Verfahren nach Anspruch 18, wobei das Thermostatisieren des Quecksilberverringerungssystems (30) durch wenigstens einen Wärmetauscher (26a) durchgeführt wird, welcher in dem Bypass-Zweig (20) eingefügt ist und dazu geeignet ist, Wärme direkt mit den Rauchgasen zu tauschen, welche in dem geschlossenen Kreislauf des Bypass-Zweigs (20) rezirkulieren, um zu ermöglichen, dass die Rauchgase, welche in dem Bypass-Zweig (20) enthalten sind, als ein Wärmeträger zwischen dem Tauscher (26a) und dem Bypass-Zweig (20) und dem Quecksilberverringerungssystem (30) wirken, während sie in dem geschlossenen Kreislauf rezirkulieren.

20. Verfahren nach einem der Ansprüche von 15 bis 19, wobei das Thermostatisieren des Quecksilberverringerungssystems (30) mittels eines Wärmetauschers ausgeführt wird, welcher der Eingrenzungsstruktur (32) des Quecksilberverringerungssystems (30) zugeordnet ist.

21. Verfahren nach Anspruch 18 und Anspruch 19 oder 20, wobei die Rauchgase, welche in dem geschlossenen Kreislauf des Bypass-Zweigs (20) rezirkulieren, durch das Festbett aus chemisch adsorbierenden Stoffen (31) strömen, wodurch die Wärmeübertragung durch das Festbett und den Bypass-Zweig (20) homogener verteilt wird.

22. Verfahren nach einem der Ansprüche von 15 bis 21, umfassend einen Schritt d) eines Rückgewinnens von Wärme aus den Rauchgasen vor deren Eindringen in den Schornstein (12) mittels wenigstens eines rekuperativen Wärmetauschers (13), welcher stromaufwärts des Bypass-Zweigs (20) in der Hauptrauchgasbehandlungsleitung (10) eingefügt ist, so dass der wenigstens eine rekuperative Wärmetauscher (13) die Rauchgase kühlt, um sie in den vordefinierten Betriebstemperaturbereich zu bringen.

## Revendications

1. Installation de traitement de fumées (1) comprenant :
- une ligne principale de traitement de fumées (10) qui est dotée d'au moins un dispositif de filtration (11) et d'une cheminée (12) pour évacuer les fumées traitées dans l'environnement ;
- un circuit de dérivation (20) de ladite ligne principale de traitement de fumées (10) qui est positionné en aval dudit dispositif de filtration (11), au moins au nombre de un, et peut être mis en communication fluidique avec ladite ligne principale de traitement de fumées (10) au moyen d'une vanne de dérivation d'entrée (21) et d'une vanne de dérivation de sortie (22) ;
- un système (30) permettant de réduire les émissions de mercure, comprenant un lit fixe d'absorbants chimiques (31) insérés par voie fluidique dans ledit circuit de dérivation (20) ;
- au moins un analyseur de concentration en mercure (40, 41), qui est approprié, en exploitation, pour détecter la concentration en mercure dans les fumées circulant à travers ladite ligne principale de traitement de fumées (10) ;
- un système de commande (50) qui est relié audit analyseur de concentration en mercure (40, 41), au moins au nombre de un, et auxdites vannes de dérivation d'entrée (21) et de sortie (22), et qui est programmé pour :
- ouvrir lesdites vannes de dérivation (21, 22) afin de laisser les fumées s'écouler à travers ledit circuit de dérivation (20) si l'analyseur (40, 41) détecte une concentration en mercure dans les fumées supérieure à une valeur seuil prédéterminée, et
- fermer lesdites vannes de dérivation (21, 22) de façon à empêcher l'écoulement des fumées à travers ledit circuit de dérivation (20), si l'analyseur (40, 41) détecte une concentration en mercure dans les fumées inférieure ou égale à ladite valeur seuil prédéterminée, ou si, après détection d'un pic de concentration supérieur à ladite valeur seuil prédéterminée, il est possible d'estimer que les concentrations moyennes en mercure dans les fumées se situent dans des limites d'émissions moyennes préétablies sur une base temporelle prédéfinie,
**caractérisée en ce qu'**elle comprend un système de thermostatisation (26a, 29a ; 26b ; 29b) dudit système (30) permettant de réduire les émissions de mercure, ledit système de thermostatisation (26a, 29a ; 26b ; 29b) pouvant être activé par ledit système de commande (50) pour maintenir le lit fixe d'adsorbants chimiques (31) dans une plage de températures de service prédéfinie comprise entre 100 °C et 250 °C, au moins lorsque lesdites vannes de dérivation (21, 22) sont fermées et que l'écoulement de fumées provenant de la ligne principale (10) à travers ledit circuit de dérivation (20) est empêché.

2. Installation de traitement de fumées (1) selon la revendication 1, dans laquelle ladite plage de températures de service prédéfinie est comprise entre 105 °C et 140 °C, et de préférence entre 120 °C et 130 °C.

3. Installation de traitement de fumées (1) selon la revendication 1 ou 2, dans laquelle lesdits adsorbants chimiques comprennent du charbon actif et/ou du coke de lignite imprégnés de sulfures, et/ou de bromures, et/ou d'iodures, de préférence sous la forme de granulés, dans laquelle lesdits adsorbants chimiques sont de préférence appropriés pour réaliser une chimio-adsorption du mercure dans une plage de températures de 90 °C à 180 °C, et de préférence de 120 °C à 130 °C.

4. Installation de traitement de fumées (1) selon l'une quelconque des revendications précédentes, dans laquelle ledit circuit de dérivation (20) comprend des moyens de ventilation (25) et dans laquelle ledit système de commande (50) est relié auxdits moyens de ventilation (25).

5. Installation de traitement de fumées (1) selon la revendication 4, dans laquelle ledit système de commande (50) est programmé pour activer lesdits moyens de ventilation (25) lorsque lesdites vannes de dérivation (21, 22) sont ouvertes et que les fumées peuvent s'écouler à travers ledit circuit de dérivation (20) de façon à surmonter les pertes de pression de fumées à travers ledit circuit de dérivation (20) et ledit système de réduction de mercure (30).

6. Installation de traitement de fumées (1) selon la revendication 4 ou 5, dans laquelle ledit circuit de dérivation (20) comprend une ligne de recirculation (23) reliant une section dudit circuit de dérivation (20) immédiatement en aval de ladite vanne de dérivation d'entrée (21) à une section dudit circuit de dérivation (20) immédiatement en amont de ladite vanne de dérivation de sortie (22) pour créer un circuit fermé au sein dudit circuit de dérivation,
dans laquelle ledit circuit de dérivation (20) comprend une vanne de recirculation (24) insérée dans ladite ligne de recirculation (23), ledit système de commande (50) étant relié à ladite vanne de recirculation (24) et étant programmé pour : - ouvrir ladite vanne de recirculation (24) lorsque lesdites vannes de dérivation (21, 22) sont fermées et que l'écoulement de fumées à travers ledit circuit de dérivation (20) est empêché ; - fermer ladite vanne de recirculation (24) lorsque lesdites vannes de dérivation (21, 22) sont ouvertes et que l'écoulement de fumées depuis la ligne principale de fumées (10) à travers ledit circuit de dérivation (20) est autorisé,
et dans laquelle ledit système de commande (50) est programmé pour activer lesdits moyens de ventilation (25) lorsque lesdites vannes de dérivation (21, 22) sont fermées et que ladite vanne de recirculation (24) est ouverte pour permettre aux fumées contenues dans le circuit de dérivation de recirculer dans ledit circuit fermé.

7. Installation de traitement de fumées (1) selon la revendication 6, dans laquelle ladite installation (1) comprend un débitmètre (28) qui est installé dans ledit circuit de dérivation (20) et est relié audit système de commande (50), et dans laquelle ledit système de commande (50) est programmé pour commander l'ouverture et la fermeture de la vanne de dérivation de sortie (22) de façon à réguler, par le biais du débitmètre (28) et des moyens de ventilation (25), le débit des fumées recirculant dans ledit circuit fermé.

8. Installation de traitement de fumées (1) selon la revendication 6 ou 7, dans laquelle ledit système de thermostatisation comprend :
- au moins un échangeur de chaleur (26a) qui est inséré dans ledit circuit de dérivation (20) et est approprié pour échanger de la chaleur directement avec les fumées s'écoulant dans ou recirculant dans ledit circuit de dérivation (20) ; et
- au moins un capteur de température (29a) qui est relié audit système de commande (50) et est installé dans ledit circuit de dérivation pour détecter la température des fumées s'écoulant dans ou recirculant dans ledit circuit de dérivation (20),
et dans laquelle ledit système de commande (50) est programmé pour activer ledit échangeur de chaleur (26a), au moins au nombre de un, en fonction des températures détectées par ledit capteur de température (29a), lorsque lesdites vannes de dérivation (21, 22) sont fermées et que ladite vanne de recirculation (24) est ouverte, de façon à thermostater le système de réduction de mercure (30), ce qui permet aux fumées contenues dans ledit circuit de dérivation d'agir comme caloporteur entre l'échangeur (26a) et le système de réduction de mercure (30) et le circuit de dérivation (20), pendant qu'elles recirculent dans ledit circuit fermé.

9. Installation de traitement de fumées (1) selon l'une quelconque des revendications précédentes, dans laquelle ledit système de réduction de mercure (30) comprend une structure de confinement (32) définissant une chambre interne (33) qui est en communication fluidique avec ledit circuit de dérivation et dans laquelle est placé ledit lit fixe d'adsorbants chimiques (31),
et dans laquelle ledit système de thermostatisation comprend :
- au moins un échangeur de chaleur (26b) qui est associé à ladite structure de confinement (32) et est approprié pour échanger de la chaleur avec le lit fixe d'adsorbants chimiques (31) ; et
- au moins un capteur de température (29b) qui est relié audit système de commande (50) et est installé dans ladite structure de confinement (32),
et dans laquelle ledit système de commande (50) est programmé pour activer ledit échangeur de chaleur associé à ladite structure de confinement (32) en fonction des températures détectées par ledit capteur de température (29b), de façon à thermostater le système de réduction de mercure (30) lorsque lesdites vannes de dérivation (21, 22) sont fermées et que ladite vanne de recirculation (24) est ouverte.

10. Installation de traitement de fumées (1) selon la revendication 6 ou 7 et la revendication 8 ou 9, dans laquelle les fumées recirculant dans ledit circuit fermé dudit circuit de dérivation (20) passent à travers ledit lit fixe d'adsorbants chimiques (31), répartissant l'échange de chaleur à travers le lit fixe d'adsorbants chimiques (31) et le circuit de dérivation (20) de façon plus homogène.

11. Installation de traitement de fumées (1) selon l'une quelconque des revendications précédentes, dans laquelle la ligne principale de traitement de fumées (10) est dotée d'au moins un échangeur de chaleur à récupération (13) qui est inséré en amont dudit circuit de dérivation (20) et est approprié pour récupérer la chaleur issue des fumées avant qu'elles n'entrent dans la cheminée (12), et dans laquelle ledit échangeur de chaleur à récupération (13), au moins au nombre de un, est commandé par le système de commande (50) de telle sorte que ledit échangeur de chaleur à récupération (13), au moins au nombre de un, refroidit les fumées afin de les amener dans ladite plage de températures de service prédéfinie.

12. Installation de traitement de fumées (1) selon l'une quelconque des revendications précédentes, dans laquelle la ligne principale de traitement de fumées (10) est dotée d'une vanne d'arrêt (14) insérée entre la vanne de dérivation d'entrée (21) et la cheminée (12) et dans laquelle ledit système de commande (50) est relié à ladite vanne d'arrêt (14) et est programmé pour :
- fermer ladite vanne d'arrêt (14) tout en ouvrant simultanément les vannes de dérivation (21, 22) de sorte que les fumées s'écoulent à travers ledit circuit de dérivation (20),
- ouvrir ladite vanne d'arrêt (14) tout en fermant simultanément les vannes de dérivation (21, 22) de façon à permettre l'émission directe des fumées à partir de la cheminée (12), empêchant ainsi celles-ci de s'écouler à travers ledit circuit de dérivation (20).

13. Installation de traitement de fumées (1) selon l'une quelconque des revendications précédentes, dans laquelle ledit analyseur de concentration en mercure (40), au moins au nombre de un, est installé dans la cheminée (12).

14. Installation de traitement de fumées (1) selon l'une quelconque des revendications précédentes, comprenant deux analyseurs de concentration en mercure (40, 41), dans laquelle un premier analyseur de concentration en mercure (40) est installé dans la cheminée (12) et un deuxième analyseur de concentration en mercure (41) est installé dans la ligne principale de traitement de fumées (10) en amont du circuit de dérivation (20), et dans laquelle lesdits deux analyseurs (40, 41) sont reliés audit système de commande (50).

15. Procédé de réduction d'émissions de mercure dans une installation de traitement de fumées selon une ou plusieurs des revendications précédentes, comprenant les étapes d'exploitation suivantes consistant à :
- (a) surveiller la concentration en mercure dans les fumées s'écoulant dans ladite ligne principale de traitement de fumées (10) pour détecter tout pic de concentration en mercure supérieur à une valeur seuil prédéterminée ;
- (b) détourner les fumées à travers le circuit de dérivation (20) dans le cas où un pic de concentration en mercure est détecté dans les fumées ; et
- (c) empêcher les fumées de s'écouler à travers le circuit de dérivation (20) si aucun pic de concentration en mercure n'est détecté dans les fumées ou si, après détection d'un pic de concentration, il est possible d'estimer que les concentrations moyennes en mercure dans les fumées se situent dans des limites d'émissions moyennes spécifiées sur une période de temps définie,
**caractérisé par** la thermostatisation dudit système de réduction de mercure (30), contenant ledit lit fixe d'adsorbants chimiques (31), pour le maintenir dans une plage de températures de service prédéfinie comprise entre 100 °C et 250 °C, au moins pendant ladite étape c) dans laquelle l'écoulement de fumées à travers le circuit de dérivation (20) est empêché.

16. Procédé selon la revendication 15, dans lequel ladite plage de températures de service prédéfinie est comprise entre 105 °C et 140 °C, et de préférence entre 120 °C et 130 °C.

17. Procédé selon la revendication 15 ou 16, dans lequel, pendant ladite étape b) consistant à détourner les fumées à travers le circuit de dérivation (20), lesdits moyens de dérivation (25) sont activés de façon à surmonter les pertes de pression des fumées à travers ledit circuit de dérivation (20) et le système de réduction de mercure (30).

18. Procédé selon la revendication 15, 16 ou 17, dans lequel pendant ladite étape c) consistant à empêcher l'écoulement de fumées à travers le circuit de dérivation (20), un circuit fermé est créé dans le circuit de dérivation (20) et lesdits moyens de ventilation (25) sont activés et ajustés selon le débitmètre (28) pour permettre aux fumées contenues dans le circuit de dérivation de recirculer dans ledit circuit fermé.

19. Procédé selon la revendication 18, dans lequel la thermostatisation dudit système de réduction de mercure (30) est réalisée par au moins un échangeur de chaleur (26a) qui est inséré dans ledit circuit de dérivation (20) et est approprié pour échanger de la chaleur directement avec les fumées recirculant dans ledit circuit fermé dudit circuit de dérivation (20), de façon à permettre aux fumées contenues dans ledit circuit de dérivation d'agir comme caloporteur entre l'échangeur (26a) et le circuit de dérivation (20) et ledit système de réduction de mercure (30), pendant qu'elles recirculent dans ledit circuit fermé.

20. Procédé selon l'une quelconque des revendications 15 à 19, dans lequel la thermostatisation dudit système de réduction de mercure (30) est effectuée au moyen d'un échangeur de chaleur qui est associé à la structure de confinement (32) du système de réduction de mercure (30).

21. Procédé selon la revendication 18 et la revendication 19 ou 20, dans lequel les fumées recirculant dans ledit circuit fermé dudit circuit de dérivation (20) s'écoulent à travers ledit lit fixe d'adsorbants chimiques (31), répartissant le transfert de chaleur à travers le lit fixe et le circuit de dérivation (20) de façon plus homogène.

22. Procédé selon l'une quelconque des revendications 15 à 21, comprenant une étape d) consistant à récupérer la chaleur issue des fumées avant leur entrée dans la cheminée (12) au moyen d'au moins un échangeur de chaleur à récupération (13) qui est inséré dans ladite ligne principale de traitement de fumées (10) en amont dudit circuit de dérivation (20), de telle sorte que ledit échangeur de chaleur à récupération (13), au moins au nombre de un, refroidit les fumées afin de les amener dans ladite plage de températures de service prédéfinie.
